(19)

Europäisches Patentamt

European Patent Office

Office européen des brevets

(11)  **EP 2 380 687 A1**

(12)  **EUROPEAN PATENT APPLICATION**
published in accordance with Art. 153(4) EPC

(43) Date of publication:
**26.10.2011  Bulletin 2011/43**

(21) Application number: **09834169.6**

(22) Date of filing: **23.12.2009**

(51) Int Cl.:
*B22F 9/24* (2006.01)  *B22F 1/00* (2006.01)
*C01B 25/32* (2006.01)  *B82B 1/00* (2006.01)
*B82B 3/00* (2006.01)  *A01N 59/26* (2006.01)
*A01N 25/12* (2006.01)

(86) International application number:
**PCT/ES2009/070628**

(87) International publication number:
**WO 2010/072882 (01.07.2010 Gazette 2010/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.12.2008  ES 200803695**

(71) Applicant: **Consejo Superior de Investigaciones Cientificas (CSIC) 28006 Madrid (ES)**

(72) Inventors:
• **MOYA CORRAL, José Serafín**
  **E-28049 Madrid (ES)**
• **DÍAZ MUÑOZ, Marcos**
  **E-28049 Madrid (ES)**

• **BARBA MARTÍN-SONSECA, María Flora**
  **E-28049 Madrid (ES)**
• **MALPARTIDA ROMERO, Francisco**
  **E-28049 Madrid (ES)**
• **MIRANDA FERNÁNDEZ, Miriam**
  **E-33424 Llanera (Asturias) (ES)**
• **FERNÁNDEZ VALDÉS, Adolfo**
  **E-33424 Llanera (Asturias) (ES)**
• **ESTEBAN TEJEDA, Leticia**
  **E-28049 Madrid (ES)**
• **LÓPEZ-ESTEBAN, Sonia**
  **E-33424 Llanera (Asturias) (ES)**
• **TORRECILLAS SAN MILLÁN, Ramón**
  **E-33424 Llanera (Asturias) (ES)**

(74) Representative: **Pons Ariño, Angel Glorieta Ruben Dario 4 28010 Madrid (ES)**

(54)  **NANOSTRUCTURED CALCIUM-SILVER PHOSPHATE COMPOSITE POWDER, METHOD FOR OBTAINING SAME, AND BACTERICIDAL AND FUNGICIDAL USES THEREOF**

(57)  The invention relates to a nanostructured calcium-silver phosphate composite powder which can be used as a bactericide and/or fungicide, with similar effectiveness to that of commercial products and with low toxicity. The invention also relates to a method for obtaining said nanostructured calcium-silver phosphate composite powders, which comprises preparing nanometric calcium phosphate by means of a sol-gel process and subsequently depositing silver nanoparticles on the surface thereof. Said nanostructured powder can be used for the production of a bactericide and/or fungicide composition suitable for use as an all-purpose disinfectant to be used, for example, in surgical implants, public facilities, food, dentistry, paints, clothes and packaging.

EP 2 380 687 A1

**Description**

**FIELD OF THE ART**

Bactericidal and fungicidal applications in the surgical implants sector, public facilities (toilets and hospitals, transport, etc.), air conditioning equipment, food, dentistry, paints, clothes and packaging (food, domestic, pharmaceutical, medical devices, etc.).

**STATE OF THE ART**

The antibacterial properties of silver in low concentrations against a broad range of pathogens, including the common bacterial strains responsible for implant-associated infections, as well as their non-toxicity to mammal cells, are well known. Most biomaterials containing silver as an antimicrobial substance consist of the elemental or cationic form of the metal supported both by organic and inorganic matrices. Studies on antimicrobial activity have been carried out in the case of polymers and bioglasses containing silver, but not in the case of nanostructured calcium-silver phosphate composite materials.

In recent years, studies have been published on the obtention of hydroxyapatite (HA) compounds with Ag using ion-exchange methods (sol-gel or co-precipitation). [Han I-H,Lee I-S, Song J-H, Lee M-H, Park J-C, Lee G-H, Sun X-D, Chung S-M. Characterization of a silver-incorporated calcium phosphate film by RBS and its antimicrobial effects. Biomed. Mater. 2007; 2(3): S91-4; Chen W, Oh S, Ong A P, Oh N, Liu Y, Courtney H S, Appleford M and Ong J L 2007 J. Biomed. Mater. Res. A 82 899; Cheng R J, Hsieh M F, Huang K C, Perng L H, Chou F I and Chin T S 2005 Journal of Solid Science and Technology 33 229; Rameshbabu N, Sampath Kumar T S, Prabhakar T G, Sastry V S, Murty K V G K and Prasad Rao K 2007 J. Biomed. Mater. Res. A 80 581]. These routes imply the substitution of calcium for silver, obtaining calcium-deficient hydroxyapatite. The antimicrobial response to these materials is good, but two main drawbacks have been observed: i) calcium deficiency can have negative effects on the structural stability of HA nanoparticles and on the osteoconductive capacity of HA, and ii) depending on the pH, silver may be released faster than desired. This has led to an increased interest in silver nanoparticles as a bactericidal source thanks to their low solubility in aqueous media.

The biocidal activity of silver nanoparticles is influenced by the size thereof: the smaller the size, the greater the microbial activity, due to which there is a problem with nanoparticle agglomeration. A solution for avoiding this drawback is to work with the nanoparticles adhered to the surface of different substrates.

**DESCRIPTION OF THE INVENTION**

**Brief Description**

One object of the invention consists of a nanocomposite or nanostructured powder, hereinafter referred to as the nanocomposite of the invention, formed by a calcium phosphate, preferably having a particle size of less than 150 nm and Ag nanoparticles adhered to its surface, preferably less than 50 nm in size.

One particular object of the invention consists of the nanocomposite powder wherein the calcium phosphate belongs, by way of example and not intended to limit the scope of the invention, to the following group: hydroxyapatite, $\alpha$-TCP, □-TCP and/or combinations thereof, preferably hydroxyapatite (HA).

Another object of the invention consists of a process for obtaining the nanocomposite powder of the invention, hereinafter referred to as the process of the invention, which comprises the following stages:

a. Preparation of the nanometric calcium phosphate via a sol-gel processing route; and
b. Deposition of silver nanoparticles on the calcium phosphate surface.

Another object of the invention consists of the use of the nanocomposite powder of the invention in the elaboration of a bactericide and/or fungicide composite which can be used as a universal disinfectant for applications belonging, by way of example and not intended to limit the scope of the invention, to the following group: surgical implants, public facilities (toilets and hospitals, transport, etc.), food dentistry, paints, clothes and packaging (food, pharmaceutical, medical devices).

**Detailed Description**

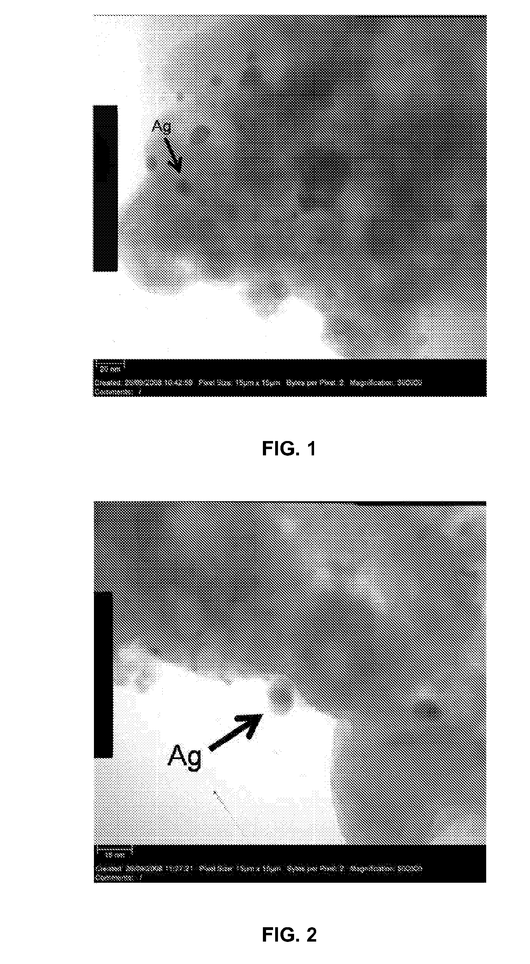

In this invention, a nanostructured powder is described formed by HA nanoparticles, less than 140 nm size, with metallic Ag nanoparticles adhered to the surface and homogeneously dispersed, having a particle size of less than 50 nm (figures 1 and 2), with bactericidal and fungicidal activity based on calcium phosphates as a substrate with silver nanoparticles on its surface. Likewise an alternative process is presented, simple and inexpensive, for obtaining said nanostructured composite material, more specifically using two different methods (Example 1).

The first advantage provided by the present invention with regard to the current state of the art consists of the fact that nanoparticle agglomeration is avoided due to their being adhered to the substrate surface. The second advantage is its bactericidal and fungicidal efficiency, similar to that of commercial products (Example 2). The third advantage is its low toxicity, demonstrated on observing that this material leaches out two orders of magnitude less silver in the case of HA/Ag (<5 ppm) than in the case of Vitelinate (approximately 800-1,300 ppm), which implies a toxicity far below that of the commercial product and very far below the toxic level (the amount of silver used is in the order of 1% by weight), and with similar effectiveness (Example 2). Additionally, silver is released in a much slower and controlled manner than in the case of materials where Ca has been substituted for Ag, as revealed by the quantitative analysis of the leached silver. Therefore, given the synergistic effect of calcium and silver on bactericidal and fungicidal behaviour, this new material can be used as a universal disinfectant.

Therefore, one object of the invention consists of a nanocomposite or nanostructured powder, hereinafter referred to as the nanocomposite powder of the invention, consisting of calcium phosphate, preferably having a particle size of less than 150 nm and having Ag nanoparticles adhered to its surface, preferably less than 50 nm in size.

One particular object of the invention consists of the nanocomposite powder wherein the calcium phosphate belongs, by way of example and not intended to limit the scope of the invention, to the following group: hydroxyapatite, $\alpha$-TCP, $\square$-TCP and/or combinations thereof, preferably hydroxyapatite (HA).

Another particular object of the invention consists of the nanocomposite powder wherein the metallic silver particles are comprised between 0.01% and 8% by weight, the optimum percentage being 1% by weight of silver.

Another object of the invention consists of a process for obtaining the nancomposite powder of the invention, hereinafter referred to as the process of the invention, which comprises the following stages:

> c. Preparation of the nanometric calcium phosphate via a sol-gel processing route; and
> d. Deposition of silver nanoparticles on the calcium phosphate surface.

Another particular object of the invention consists of the process of the invention where in stage a) the calcium phosphate has been prepared by means of a sol-gel process comprising the following stages:

> a) Preparation of the corresponding aqueous solutions with necessary amount of triethyl phosphite and calcium nitrate to obtain the desired Ca/P molar ratio in the final mixture, preferably 1.67 in the case of hydroxyapatite;
> b) Drop by drop addition of the phosphorus solution to the calcium solution while agitating strongly, maintaining controlled temperature and pH conditions;
> c) Agitation of the resulting colloidal suspension and subsequent ageing at ambient temperature, preferably for 24 hours, to form a gel; and
> d) Drying of the gel in a vacuum heater until fully eliminating the solvent and calcination at temperatures comprised between 500ºC and 1,000ºC, preferably 550ºC, to obtain a nanometric-sized and well-crystallised powder.

Another particular object of the invention consists of the process of the invention, where in stage b) it comprises the following steps (Method 1):

> a) Preparation of an aqueous suspension with the powder obtained in 6, adjusting the pH to 5 and whereto an anionic surfactant is added at low concentration;
> b) Addition, in the absence of light, of an aqueous solution of the silver salt precursor having the necessary concentration for the elemental silver content to be comprised between 0.01% and 8% by weight in the final compound, referenced to the calcium phosphate solid content, preferably 1% by weight of silver;
> c) Strong agitation of the suspension, adjusting the pH to 9, in such a manner that $Ag^+$ cations precipitate as oxide ($Ag_2O$);
> d) Filtering, washing with distilled water and drying of the resulting powder; and
> e) Reduction in a $H_2$/Ar atmosphere within the temperature range comprised between 150ºC and 500ºC; preferably 350ºC.

Another particular object of the invention consists of the process of the invention where in stage b) it comprises the following steps (Method 2):

> a) Preparation of an aqueous suspension with the hydroxyapatite powder obtained in 6, whereto an anionic surfactant at low concentration is added;

b) Adjustment of the pH to 7 using an aqueous NaOH 0.1 N solution;

c) Application of an ultrasound probe for 1-10 minutes and complete homogenisation and disintegration in a ball mill;

d) Drop by drop addition of the necessary amount of the silver precursor solution, $AgNO_3$, to obtain an $Ag^0$ concentration in the final product comprised between 0.01% and 8% by weight in the final compound, continuing to agitate strongly for 10 minutes, preferably 1% by weight of silver;

e) Chemical reduction of the silver in situ using any reducing agent, preferably $NaBH_4$, which is added drop by drop to the dispersion while continuing to agitate strongly; and

f) Filtering, washing with distilled water and drying in a heater at 60ºC.

Finally, another object of the invention consists of the use of nanocomposite powder of the invention in the elaboration of a bactericidal and/or fungicidal composition which can be used as a universal disinfectant for applications belonging, by way of example and not intending to limit the scope of the present invention, to the following group: surgical implants, public facilities (toilets and hospitals, transport, etc.), food, dentistry, paints, clothes and packaging (food, pharmaceutical, medical devices).

## DESCRIPTION OF THE FIGURES

Figure 1 is a micrograph obtained by Transmission Electron Microscopy, which shows the homogeneous distribution of silver nanoparticles less than 20 nm in size adhered to the surface of a hydroxyapatite nanoparticle approximately 140 nm in size, obtained by means of Method 1.

Figure 2 is a micrograph obtained by Transmission Electron Microscopy, which shows a nanocomposite powder obtained by means of Method 2, where it can be observed that the Ag nanoparticles are less than 15 nm in size.

## EXAMPLES OF EMBODIMENT OF THE INVENTION

### Example 1 - Process for obtaining the nanocomposite powder of the invention

The process for obtaining the nanocomposite powder of the invention, which comprises two main preparation stages of the nanometric calcium phosphate via a sol-gel processing route and deposition of silver nanoparticles on the calcium phosphate surface, is described in detail below.

### 1.1 - Hydroxyapatite (HA) synthesis as calcium phosphate

The precursors used for synthesing HA were triethyl phosphite (98%, *Aldrich)* and calcium nitrate tetrahydrate (≥99%, *Fluka).* The process followed is set out in detail below:

1. The corresponding aqueous solutions are prepared using the necessary amount of these precursors to obtain a Ca/P molar ratio of 1.67 in the final mixture.

2. The triethylphosphite is added drop by drop on the calcium solution while agitating strongly, maintaining controlled temperature and pH conditions.

3. The resulting colloidal suspension is maintained with agitation and, after ageing at ambient temperature for 24 hours, forms a gel, and

4. The resulting gel is dried in a vacuum heater until fully eliminating the solvent. It is then calcinated at 550ºC, obtaining a nanometric-sized and well-crystallised hydroxyapatite powder less than 150 nm in size.

### 1.2 - Deposition process of silver on the HA nanoparticles

As of this point, the nanostructured powders of the invention were obtained by means of two different methods.

Method 1

After HA nanoparticle synthesis by means of the sol-gel method and subsequent calcination, deposition of silver oxide as of a precursor (for example, silver nitrate) on HA dispersed in water with the optimum amount of surfactant takes place. Next, the cation $Ag^+$ is reduced to $Ag^0$ in an oven in an $Ar/H_2$ atmosphere, as explained in detail below:

a) An aqueous suspension is prepared with the hydroxyapatite powder obtained in 1.1. The pH is adjusted to 5 with agitation. In order to achieve better dispersion of the hydroxyapatite, an anionic surfactant at low concentration is introduced as a dispersing agent (1% by weight with respect to the hydroxyapatite concentration in solids),

b) An aqueous silver salt precursor solution is added, protected from light, having the necessary concentration for the elemental silver content to be comprised between 0.01% and 8% by weight in the final HA-Ag compound (referenced to the HA solid content);

c) While strongly agitating the suspension, the pH is adjusted to 9, in such a manner that Ag+ cations are precipitated as oxide ($Ag_2O$); and

d) After filtering and washing, it is dried and reduced in an $Ar/10\%H_2$ atmosphere within the temperature range comprised between 150ºC and 500ºC.

A nanocomposite powder with silver nanoparticles less than 20 nm in size, adhered to the surface of a hydroxyapatite nanoparticle approximately 140 nm in size with a homogeneous distribution, was thus obtained.

Method 2

After HA nanoparticle synthesis by means of the sol-gel method and subsequent calcination, silver nanoparticles, Ag0, are deposited on hydroxyapatite as of a silver precursor dispersed in water with an optimum pH and dispersing agent. The reduction is performed in situ using a reducing agent at ambient temperature.

a) An aqueous suspension is prepared with the hydroxyapatite powder obtained. In order to achieve better dispersion of the hydroxyapatite, an anionic surfactant at low concentration is introduced as a dispersing agent *(Dolapix);*

b) The ph is adjusted to 7 using an aqueous NaOH 0.1 N solution in order to achieve good dispersion of the HA particles and avoid, at the same time, precipitation of $Ag^+$ ions as $Ag_2O$, which occurs at pH values higher than 8;

c) Ultrasound probe for 1-10 minutes. Homogenisation and disintegration in a ball mill;

d) In order to obtain a concentration of $Ag^0$ in the final product comprised between 0.01% and 8% by weight in the final HA-Ag compound, the necessary amount of precursor, $AgNO_3$, is added. Once added drop by drop on the HA dispersion, it is agitated strongly for 10 minutes before continuing to the next step. This process must be carried out protecting the precursor solution and the dispersion after adding the precursor from light;

e) Silver reduction is performed chemically in situ using, for example, $NaBH_4$ as a reducing agent, which reacts with the silver in a molar ratio of 1:8 (($NaBH_4:Ag^+$), according to the reactions:

$$8\left(Ag^+ + 1e^- \leftrightarrow Ag^0\right)$$
$$\underline{BH_4^- + 3H_2O \leftrightarrow B(OH)_3 + 7H^+ + 8e^-}$$
$$8\,Ag^+ + BH_4^- + 3H_2O \leftrightarrow Ag^0 + B(OH)_3 + 7H^+$$

f) The NaBH4 solution is deposited drop by drop on the dispersion; and

g) It is agitated strongly, filtered, washed with distilled water and, finally, dried in a heater at 60ºC.

The nanocomposite powder of the invention was thus obtained, where it could be observed that the Ag nanoparticles were less than 15 nm in size.

**EXAMPLE 2 - Trials of biocide activity and leaching of the nanocomposite powder of the invention**

Bactericidal tests were conducted to investigate the effect of the samples containing silver on different organisms: *Escherichia coli JM 110* (Gram-negative bacteria), *Micrococcus luteus* (Gram-positive bacteria) and *Issatchenkia orientalis* (yeast). The microorganisms were sown in a Luria-Bertani (LB) solid medium on Petri dishes (containing: 1% tryptone, 0.5% yeast extract, 1% ClNa, 1.5% agar) for *E. coli* JM110 and M. luteus or yeast extract dextrose (YEPD) (containing: 1% yeast extract, 2% peptone, 2% glucose). The dishes were incubated for 24 hours at 37ºC. Next, isolated colonies of the aforementioned dishes of each microorganism were inoculated into 5 mL of LB (bacteria) or YEPD (yeast) and cultivated at 37°C for 5 hours to obtain the pre-cultures. Aqueous suspensions of 200 mg/ml (weight/weight) of preparations M1 and M2 containing 1% silver were simultaneously prepared. Finally, 10 µL of each of the pre-cultures of microorganisms were inoculated into 1 mL of LB or YEPD, depending on the microorganism. Next, 150 µL of the HA/nAg samples (M1 and M2) were added to the cultures, resulting in a final concentration of 0.13% by weight of Ag. Likewise, samples without silver were prepared for control purposes, consisting of a mixture of water and the corresponding nutrient. The cultures were incubated at 37°C with agitation and aliquots were taken of the different cultures for viable counts after performing serialised dilutions of each.

### 2.1 - Biocide test performed with *Micrococcus luteus*

An aqueous suspension (9% by weight of solids) was prepared with the HA powder obtained using Method 1 ($AgNO_3$ was used as a silver precursor and the silver content of the final compound, HA-Ag, was 1% by weight (referenced to the HA solid content)). The test performed with *Micrococcus luteus* showed a title of $<1.0 \cdot 10^4$ after 24 hours, while the control is $3.0 \cdot 10^9$.

After 72 hours, the concentration of calcium leached into the culture medium was found to be within the range of 15-30 ppm. The concentration of silver was <5 ppm. Parallel thereto, the same starting concentration of silver as of commercial nanostructured Silver Vitelinate (Argenol, with a particle size of less than 20 nm) was inoculated thereinto, whereupon it was observed that approximately 1,300 ppm of silver was leached.

### 2.2 - Biocide test performed with Escherichia coli

An aqueous suspension (9% by weight of solids) was prepared with the HA powder obtained using Method 1 ($AgNO_3$ was used as a silver precursor and the silver content in the final compound, HA-Ag, was 1% by weight (referenced to the HA solid content)). The test performed with *Escherichia coli JM 110* showed a title of $<1.0 \cdot 10^4$ after 24 hours, while the control is $1.4 \cdot 10^{11}$.

After 72 hours, the concentration of calcium leached into the culture medium was found to be within the range of 15-30 ppm. The concentration of silver was <5 ppm. Parallel thereto, the same starting concentration of commercial nanostructured Silver Vitelinate *(Argenol,* with a particle size of less than 20 nm) was inoculated thereinto, whereupon it was observed that approximately 900 ppm of silver was leached.

### 2.3 - Biocide test performed with *Issatchenkia orientalis*

An aqueous suspension (9% by weight of solids) was prepared with the HA powder obtained using Method 2 ($AgNO_3$ was used as a silver precursor) and the silver content in the final compound, HA-Ag, was 1% by weight (referenced to the HA solid content)). The bactericidal test performed with *Issatchenkia orientalis* showed a title of $1.0 \cdot 10^4$ after 24 hours, while the control is $1.2 \cdot 10^{11}$.

After 72 hours, the concentration of calcium leached into the culture was found to be within the range of 15-30 ppm. The concentration of silver was <5 ppm. Parallel thereto, the same starting concentration of commercial nanostructured Silver Vitelinate *(Argenol,* with a particle size of less than 20 nm) was inoculated thereinto, whereupon it was observed that approximately 800 ppm of silver was leached.

### 2.4 - Biocide test performed with *Micrococcus luteus*

An aqueous suspension (9% by weight of solids) was prepared with the HA powder obtained using Method 2 ($AgNO_3$ was used as a silver precursor) and the silver content in the final compound, HA-Ag, was 1% by weight (referenced to the HA solid content)). The bactericidal test performed with *Micrococcus luteus* showed a title of $4.0 \cdot 10^4$ of 24 hours, while the control is $3.0 \cdot 10^9$.

After 72 hours, the concentration of calcium leached into the culture was found to be within the range of 15-30 ppm. The concentration of silver was <5 ppm. Parallel thereto, the same starting concentration of commercial nanostructured Silver Vitelinate *(Argenol,* with a particle size of less than 20 nm) was inoculated thereinto, whereupon it was observed that approximately 900 ppm of silver was leached.

### 2.5 - Biocide test performed with *Escherichia coli JM 110*

An aqueous suspension (9% by weight of solids) was prepared with the HA powder obtained using Method 2 ($AgNO_3$ was used as a silver precursor) and the silver content in the final compound, HA-Ag, was 1% by weight (referenced to the HA solid content)). The bactericidal test performed with *Escherichia coli JM 110* showed a title of $<1.0 \cdot 10^4$ after 24 hours, while the control is $1.4 \cdot 10^{11}$.

After 72 hours, the concentration of calcium leached into the culture was found to be within the range of 15-30 ppm. The concentration of silver was <5 ppm. Parallel thereto, the same starting concentration of commercial nanostructured Silver Vitelinate *(Argenol,* with a particle size of less than 20 nm) was inoculated thereinto, whereupon it was observed that approximately 1,300 ppm of silver was leached.

**Claims**

1. Nanocomposite powder **characterised in that** it formed by a calcium phosphate, preferably having a particle size of less than 150 nm and Ag nanoparticles adhered to the surface thereof, preferably less than 50 nm in size.

2. Nanocomposite powder, according to claim 1, **characterised in that** the calcium phosphate belongs to the following group: hydroxyapatite, $\alpha$-TCP, - TCP and/or a combination thereof.

3. Nanocomposite powder, according to claim 1, **characterised in that** the calcium phosphate is hydroxyapatite (HA).

4. Nanocomposite powder, according to claim 1, **characterised in that** the metallic silver particle content is comprised between 0.01% and 8% by weight, preferably 1% by weight of silver.

5. A process for obtaining the nanocomposite powder, according to claims 1 and 4, **characterised in that** it comprises the following stages:

   a) Preparation of the nanometric calcium phosphate via a sol-gel processing route; and
   b) Deposition of silver nanoparticles on the calcium phosphate surface.

6. A process, according to claim 5, **characterised in that** in stage a) the calcium phosphate has been prepared by means of a sol-gel process, which comprises the following steps:

   a) Preparation of the corresponding aqueous solutions with necessary amount of triethyl phosphite and calcium nitrate to obtain the desired Ca/P molar ratio in the final mixture, preferably 1.67 in the case of hydroxyapatite;
   b) Drop by drop addition of the phosphorus solution on the calcium solution while agitating strongly, maintaining controlled temperature and pH conditions;
   c) Agitation of the resulting colloidal suspension and subsequent ageing at ambient temperature, preferably for 24 hours, to form a gel; and
   d) Drying of the gel in a vacuum heater until fully eliminating the solvent and calcination at temperatures comprised between 500ºC and 1,000ºC, preferably 500ºC, to obtain the nanometric-sized and well-crystallised powder.

7. A process, according to claim 5, **characterised in that** in stage b) it comprises the following steps:

   a. Preparation of an aqueous suspension with the powder obtained in 6, adjusting the pH to 5, and wherein an anionic surfactant at low concentration is added;
   b. Addition, in the absence of light, of an aqueous solution of the silver salt precursor having the necessary concentration for the elemental silver content to be comprised between 0.01% and 8% by weight in the final compound, referenced to the calcium phosphate solid content, preferably at 1% by weight of silver;
   c. Strong agitation of the suspension, adjusting the pH to 9, in such a manner that Ag$^+$ cations precipitate as Ag$_2$O;
   d. Filtering, washing with distilled water and drying of the resulting powder; and
   e. Reduction in a H$_2$/Ar atmosphere within the temperature range comprised between 150ºC and 500ºC, preferably 350ºC.

8. Process, according to claim 5, **characterised in that** in stage b) it comprises the following steps:

   a) Preparation of an aqueous suspension with the hydroxyapatite powder obtained in 6, whereto an anionic surfactant at low concentration is added;
   b) Adjustment of the pH to 7 using an aqueous solution of NaOH 0.1 N;
   c) Application of an ultrasound probe for 1-10 minutes and complete homogenisation and disintegration in a ball mill;
   d) Dropwise addition of the necessary amount of the silver precursor solution, AgNO$_3$, to obtain a concentration of Ag$^0$ in the final product comprised between 0.0º% and 8% by weight in the final compound, continuing to agitate strongly for 10 minutes, preferably at 1% by weight of silver;
   e) Chemical reduction of the silver in situ, using any reducing agent, preferably NaBH$_4$, which is added drop by drop to the dispersion while continuing to agitate strongly; and
   f) Filtering, washing with distilled water and drying in a heater at 60ºC.

9. Use of the nanocomposite powder, according to claims 1 to 4, in the preparation of a bactericide and/or fungicide composition which can be used as a disinfectant for applications belonging to the following group: surgical implants, public facilities (toilets and hospitals, transport, etc.), food, dentistry, paints, clothes and packaging (food, pharmaceutical, medical devices).

**FIG. 1**

**FIG. 2**

# INTERNATIONAL SEARCH REPORT

| International application No. |
|---|
| PCT/ ES 2009/070628 |

**A. CLASSIFICATION OF SUBJECT MATTER**

see extra sheet

According to International Patent Classification (IPC) or to both national classification and IPC

**B. FIELDS SEARCHED**

Minimum documentation searched (classification system followed by classification symbols)

B22F, C01B, B82B, A01N

Documentation searched other than minimum documentation to the extent that such documents are included in the fields searched

Electronic data base consulted during the international search (name of data base and, where practicable, search terms used)

INVENES,EPODOC,WPI,CAPLUS,XPESP

**C. DOCUMENTS CONSIDERED TO BE RELEVANT**

| Category* | Citation of document, with indication, where appropriate, of the relevant passages | Relevant to claim No. |
|---|---|---|
| P,X | DIAZ, M., et al., Synthesis and antimicrobial activity of a silver-hydroxyapatite nanocomposite, Journal of Nanomaterials, 2009, artículo ID 498505, 6 pages. the whole document. | 1-9 |
| P,X | ICHIKAWA , Y., et al., Hybridization of silsee nanoparticles on hydroxyapatite in an aqueous solution, Journal of the Ceramic Society of Japan, 2009, Vol.117, págs. 294-298. the whole document. | 1-4,9 |
| X | LIU, J.-K., et al., Preparation of silver/ hydroxyapatite nanocomposite spheres, Powder Technology, 2008, Vol.184, págs. 21-24. the whole document. | 1-4,9 |

☒ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
|---|---|
| 11.May.2010        (11.05.2010) | **(13/05/2010)** |
| Name and mailing address of the ISA/ O.E.P.M.<br><br>Paseo de la Castellana, 75 28071 Madrid, España.<br>Facsimile No.  34 91 3495304 | Authorized officer<br>                    M. García Poza<br><br><br>Telephone No. +34 91 349 55 68 |

Form PCT/ISA/210 (second sheet) (July 2009)

## INTERNATIONAL SEARCH REPORT

| International application No. |
| --- |
| PCT/ES 2009/070628 |

| C (continuation). | DOCUMENTS CONSIDERED TO BE   RELEVANT | |
| --- | --- | --- |
| Category* | Citation of documents, with indication, where appropriate, of the relevant passages | Relevant to claim No. |
| A | BERA, T., et al., Morphological changes in biomimetically synthesized hydroxyapatite and silsee nanoparticles for medical applications, Journal of Materials Science (2009), 44(9), 2264-2270, publicado in line the 05-09-2008. | 1-9 |
| A | FERRAZ, M.P., et al., Hydroxyapatite nanoparticles: A review of preparation methodologies, Journal of Applied Biomaterials & Biomechanics, 2004, Vol.2, págs.74-80. | 1-9 |
| A | ARUMUGAN, S.K., et al., One step synthesis of silsee nanorods by autoreduction of aqueous silsee ions with hydroxyapatite: an inorganic-inorganic hybrid nanocomposite, Journal of Biomedical Research part A, 2006, Vol.80, págs. 391 – 398. | 1-9 |

Form PCT/ISA/210 (continuation of second sheet) (July 2009)

**INTERNATIONAL SEARCH REPORT**

International application No.

PCT/ ES 2009/070628

CLASSIFICATION OF SUBJECT MATTER

*B22F 9/24* (2006.01)
*B22F 1/00* (2006.01)
*C01B 25/32* (2006.01)
*B82B 1/00* (2006.01)
*B82B 3/00* (2006.01)
*A01N 59/26* (2006.01)
*A01N 25/12* (2006.01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Han I-H,Lee I-S ; Song J-H ; Lee M-H ; Park J-C ; Lee G-H ; Sun X-D ; Chung S-M.** Characterization of a silver-incorporated calcium phosphate film by RBS and its antimicrobial effects. *Biomed. Mater.,* 2007, vol. 2 (3), 91-4
- **Chen W ; Oh S ; Ong A P ; Oh N ; Liu Y ; Courtney H S ; Appleford M ; Ong J L.** *J. Biomed. Mater. Res. A,* vol. 82, 899
- **Cheng R J ; Hsieh M F ; Huang K C ; Perng L H ; Chou F I ; Chin T S.** *Journal of Solid Science and Technology,* 2005, vol. 33, 229
- **Rameshbabu N ; Sampath Kumar T S ; Prabhakar T G ; Sastry V S ; Murty K V G K ; Prasad Rao K.** *J. Biomed. Mater. Res. A,* 2007, vol. 80, 581